# DEMANDE DE BREVET EUROPEEN

(11) **EP 3 109 759 A1**
(43) Date de publication de la demande: **28.12.2016**
(21) Numéro de dépôt: 16172690.6
(22) Date de dépôt: 02.06.2016
(51) Int. Cl.: G06F 9/50, G06F 9/44

(54) **DISPOSITIF D'INTERFACE DE PROGRAMMATION POUR GÉNÉRER DES PROGRAMMES INFORMATIQUES DÉDIÉS DE SERVICE D'UTILISATION DE RESSOURCES INFORMATIQUES PARTAGÉES**

(30) Priorité: 03.06.2015 FR 1555034
(71) Demandeur: BULL SAS, 78340 Les Clayes sous Bois (FR)
(72) Inventeur: LEVRIER, Marc, 91410 SAINT CYR SOUS DOURDAN (FR); CALEGARI, Patrice, 91790 BOISSY SOUS SAINT YON (FR); LACOUR, Sébastien, 31200 TOULOUSE (FR); BALCZYNSKI, Pawel, 93-171 Lodz (PL)
(74) Mandataire: Cabinet Camus Lebkiri

(57) **Abrégé**

Un dispositif d'interface de programmation (DI) fait partie d'un équipement de réseau (ER) qui est accessible via au moins un réseau de communication (RC) et permet à des usagers d'utiliser des ressources informatiques (CH). Ce dispositif (DI) comprend des moyens d'interface (MI) agencés pour proposer aux usagers des objets informatiques et des fonctions relatifs à l'utilisation des ressources informatiques (CH), et des attributs paramétrables de ces objets informatiques et fonctions, et des moyens de traitement (MT) agencés pour générer, pour un usager et conformément à un modèle informatique choisi, un programme informatique dédié de service d'utilisation de certaines au moins des ressources informatiques (CH), par association d'objet(s) et/ou de fonction(s) et d'attribut(s) de ces derniers, tous choisis par cet usager parmi ceux proposés.

## Description

L'invention concerne les dispositifs d'interface de programmation (ou API (« Application Programming Interface »)) qui sont destinés à faire partie d'équipements de réseau accessibles via au moins un réseau de communication.

Comme le sait l'homme de l'art, certains équipements de réseau permettent à des usagers d'utiliser des ressources informatiques partagées, comme par exemple un calculateur à hautes performances (ou HPC (« High Performance Computer »)) qui fait partie d'un nuage informatique (ou « cloud »), public ou privé, ou de l'Internet. A titre d'exemple, cela permet à plusieurs filiales d'un même groupe ou à plusieurs entreprises de petites ou moyennes dimensions et indépendantes d'utiliser de temps en temps, pour leurs besoins personnels, un même calculateur à hautes performances (éventuellement un supercalculateur).

Afin qu'un usager puisse effectivement utiliser certaines au moins de ces ressources informatiques, il faut qu'il ait préalablement généré un programme informatique dédié de service d'utilisation de ces ressources informatiques. Un tel programme informatique dédié peut être généré par un usager à l'aide d'un dispositif d'interface de programmation (ou API) faisant partie d'un équipement de réseau gérant l'utilisation des ressources informatiques. On notera qu'un même programme informatique dédié conçu par un usager peut éventuellement servir à plusieurs autres usagers différents, dans le cadre, par exemple, d'un service automatisé de gestion de calculs à distance (de type « HPC-as-a-Service »).

Hélas, ce dispositif d'interface de programmation ayant été conçu par le propriétaire de l'équipement de réseau, il impose les méthodologies et ergonomie de ce propriétaire à tous ses usagers, et donc s'avère fréquemment mal adapté aux besoins exacts de ces usagers.

Plusieurs APlS, destinées à faciliter la génération des programmes informatiques précités, ont déjà été proposées. C'est par exemple le cas de cycleserver ®, enginframe ®, Jarvice APl ®, hila ®, ou Microsoft HPC web service ®. Mais ces APls n'apportent pas une entière satisfaction. Notamment, elles n'offrent généralement pas un service complet de calcul à haute performance (ou « HPC-as-a-Service »), à savoir un service sous forme logicielle (ou « Software-as-a-Service ») multi-applicatif. Cela résulte notamment du fait de la difficulté de l'exposition « uniforme » d'applications métier de calcul intensif potentiellement très différentes (mécanique, énergie, finance, sciences de la vie, électronique, media...). En effet, cette exposition impose l'unification des méthodes de gestion de ces applications métier (enregistrement, licences, versions, paramétrage, soumission des travaux de calcul et de visualisation interactive des résultats...).

L'invention a notamment pour but d'améliorer la situation.

Elle propose notamment à cet effet un dispositif d'interface de programmation, destiné à faire partie d'un équipement de réseau accessible via au moins un réseau de communication et permettant à des usagers d'utiliser des ressources informatiques partagées, et comprenant :
- des moyens d'interface agencés pour proposer aux usagers des objets informatiques et des fonctions relatifs à l'utilisation de ces ressources informatiques, et des attributs paramétrables de ces objets informatiques et fonctions, et
- des moyens de traitement agencés pour générer, pour un usager et conformément à un modèle informatique choisi, un programme informatique dédié de service d'utilisation de certaines au moins des ressources informatiques, par association d'objet(s) et/ou de fonction(s) et d'attribut(s) de ces derniers, tous choisis par cet usager parmi ceux proposés.

Le dispositif d'interface de programmation selon l'invention peut comporter d'autres caractéristiques qui peuvent être prises séparément ou en combinaison, et notamment :
- chaque objet peut être choisi dans un groupe comprenant (au moins) un utilisateur, un groupe, un projet, un travail, une session de visualisation, une ressource, une application, un formulaire de soumission, une licence, un agrégat, une consommation de ressource, un crédit, un service d'authentification, un ordonnanceur de travaux, et un mécanisme de sécurité ;
- chaque fonction peut être choisie parmi (au moins) une authentification, une statistique d'utilisation, un travail de calcul, une exécution, une planification, une gestion, et un calcul ;
- les ressources informatiques partagées peuvent constituer un calculateur à hautes performances (ou HPC) et/ou distribué ;
   ➢ le calculateur à hautes performances peut, par exemple, faire partie soit d'un nuage informatique (ou « cloud »), soit de l'Internet ;
- le modèle informatique choisi peut, par exemple, être « representational state transfer » (ou REST) ;
- il peut être agencé sous la forme d'un produit programme d'ordinateur qui comprend un jeu d'instructions propre à être exécuté par des moyens de traitement de l'équipement de réseau. Un tel produit programme d'ordinateur peut ainsi se présenter sous la forme d'un jeu de programmes permettant à un portail de service de s'interfacer avec son environnement technique cible.

L'invention propose également un équipement de réseau, propre à être connecté à au moins un réseau de communication, et comprenant un dispositif d'interface de programmation du type de celui présenté ci-avant.

Un tel équipement de réseau peut, par exemple, être agencé sous la forme d'un portail (ou plateforme) de service.

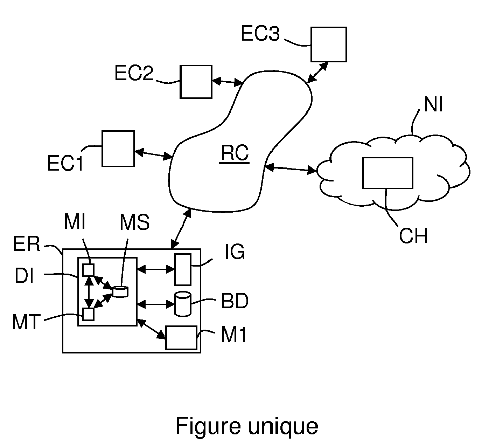

D'autres caractéristiques et avantages de l'invention apparaîtront à l'examen de la description détaillée ci-après, et du dessin annexé, sur lequel l'unique figure illustre de façon schématique et fonctionnelle un équipement de réseau équipé d'un exemple de réalisation d'un dispositif d'interface de programmation selon l'invention et couplé à un réseau de communication auquel sont également couplés un calculateur à hautes performances et des équipements communicants d'usagers.

L'invention a notamment pour but de proposer un dispositif d'interface de programmation DI, destiné à faire partie d'un équipement de réseau ER qui est accessible via au moins un réseau de communication RC et qui permet à des usagers d'utiliser des ressources informatiques partagées CH.

Dans ce qui suit, on considère, à titre d'exemple non limitatif, que les ressources informatiques partagées CH constituent un calculateur à hautes performances (ou HPC). Mais l'invention n'est pas limitée à ce type de ressources informatiques partagées. Elle concerne également les plateformes de calcul distribué en agrégat (ou « cluster ») au sens large, ou de visualisation distante, et potentiellement de toute plateforme en charge de traitements massifs et/ou répétitifs utilisant des mécanismes de partage de ressources et d'ordonnancement de travaux.

Par ailleurs, on considère dans ce qui suit, à titre d'exemple non limitatif, que le calculateur à hautes performances CH fait partie d'un nuage informatique (ou « cloud ») NI. Mais cela n'est pas obligatoire. En effet, il pourrait faire partie de l'Internet ou d'un réseau de communication privé.

On a schématiquement et fonctionnellement illustré sur l'unique figure un réseau de communication RC auquel sont couplés un équipement de réseau RC équipé d'un exemple de réalisation non limitatif d'un dispositif d'interface de programmation DI selon l'invention, un nuage informatique NI comprenant un calculateur à hautes performances CH (définissant des ressources informatiques partagées), et des équipements communicants ECj d'usagers.

Dans l'exemple illustré non limitativement, le nombre d'équipements communicants ECj est égal à trois (j = 1 à 3). Mais ce nombre peut prendre n'importe quelle valeur supérieure ou égale à un (1).

Par exemple, les équipements communicants ECj sont des ordinateurs individuels. Mais cela n'est pas obligatoire. Il pourrait s'agir également d'ordinateurs portables (ou « laptops ») ou de tablettes électroniques, par exemple. D'une manière générale, on entend ici par « équipement communicant » un équipement électronique utilisé par un usager et disposant d'un navigateur Internet (ou web), d'une interface homme/machine, comme par exemple un clavier (éventuellement tactile), d'un écran d'affichage, et d'un module de communication pouvant être connecté à un réseau de communication filaire et/ou à un réseau de communication non filaire.

Le réseau de communication RC comprend, par exemple, une infrastructure de communication filaire à laquelle peuvent se connecter des équipements communicants ECj, des nuages informatiques NI, et des équipements de réseau ER, comme par exemple des portails (ou plateformes) de service ou des serveurs. Mais il pourrait ne comprendre qu'une infrastructure de communication non filaire, ou bien à la fois une infrastructure de communication filaire et une infrastructure de communication non filaire. Il pourrait également représenter un ensemble de réseaux de communication participant à l'Internet. Une gestion de la sécurité peut être envisagée, par exemple de type VPN (« Virtual Private Network » - réseau privé virtuel).

L'équipement de réseau ER, qui comprend le dispositif d'interface de programmation DI selon l'invention, est, par exemple, une plateforme (ou portail) de service permettant aux usagers des équipements communicants ECj d'utiliser les ressources informatiques partagées CH (ici un calculateur à hautes performances contenu dans un nuage informatique NI). Mais il pourrait également s'agir d'un serveur.

Dans l'exemple non limitatif illustré sur l'unique figure, la plateforme de service ER comprend également une interface graphique (ou GUI (« Graphical User interface »)) IG, une base de données BD, et un premier module M1.

L'interface graphique IG est une interface homme/machine permettant à une personne habilitée de contrôler la plateforme ER, et notamment son dispositif d'interface de programmation DI.

La base de données BD stocke des données définissant des objets métier qui sont nécessaires au fonctionnement d'un service complet de calcul à haute performance (ou « HPC-as-a-Service »), et leurs cycles de vie.

Le premier module M1 est chargé de l'authentification des utilisateurs, que le dispositif d'interface de programmation DI délègue au mécanisme d'authentification en place dans un nuage et pouvant répondre à divers standards technologiques, comme par exemple LDAP, NIS et AD.

Comme illustré non limitativement sur l'unique figure, le dispositif d'interface de programmation DI, selon l'invention, comprend au moins des moyens d'interface MI et des moyens de traitement MT.

Ce dispositif d'interface de programmation DI est, par exemple, réalisé sous la forme de modules logiciels (ou informatiques (ou encore « software »)), de préférence de type services web. Il constitue alors un produit programme d'ordinateur comprenant un jeu d'instructions exécutable par des moyens de traitement de type circuits électroniques (ou « hardware ») de la plateforme ER. Un tel produit programme d'ordinateur peut ainsi se présenter sous la forme d'un jeu de programmes permettant à un portail de service de s'interfacer avec son environnement technique cible. Mais dans une variante de réalisation le dispositif d'interface de programmation DI pourrait être réalisé sous la forme d'une combinaison de modules logiciels et de circuits électroniques.

Les moyens d'interface MI sont agencés pour proposer aux usagers, qui se sont connectés à la plateforme ER au moyen de leur équipement communicant ECj, des objets informatiques et des fonctions qui sont relatifs à l'utilisation des ressources informatiques CH associées à cette plateforme ER (ici un calculateur à hautes performances contenu dans un nuage informatique NI), et des attributs paramétrables (ou « instanciables ») de ces objets informatiques et fonctions.

Par exemple, et comme illustré non limitativement, le dispositif (d'interface de programmation) DI comprend une mémoire MS, éventuellement de type logiciel, dans laquelle sont stockées des données définissant tous les objets proposés, toutes les fonctions proposées, et tous les attributs associés à chacun de ces objets et chacune de ces fonctions.

On entend ici par « objet informatique » tout objet ou concept instancié autour de notions caractéristiques du domaine d'un HPC-as-a-Service, et notamment un utilisateur, un groupe, un projet, un travail (ou « job »), une session de visualisation, une ressource, une application, un formulaire de soumission, une licence, un agrégat (ou « cluster »), une consommation de ressource, un crédit, un service d'authentification, un ordonnanceur de travaux, ou un mécanisme de sécurité.

Par ailleurs, on entend ici par « fonction » une action appliquée à au moins un objet, comme par exemple un environnement standard d'authentification, une statistique d'utilisation de ressources informatiques CH, un travail de calcul (ou « job »), une exécution de tâche, une planification de réservation de session(s) de visualisation, une gestion de données, une gestion de fichier(s), une gestion de serveur(s) et de fichier(s) de licence(s) d'application(s) propres à un métier, une gestion de publication d'applications propres à un métier, une gestion de projet(s), ou une gestion de groupe(s) (ou « cluster(s) ») de calcul.

Dans ce qui précède les objets sont l'environnement standard, les ressources informatiques CH, la tâche, la réservation, les fichiers, les serveurs, les fichiers de licence(s) d'application(s), la publication d'applications, les projets, et les agrégats (ou clusters). Par ailleurs, dans ce qui précède les fonctions sont l'authentification, la statistique d'utilisation, le travail de calcul, l'exécution, la planification, la gestion, et le calcul.

On notera que la liste qui précède est non exhaustive. Elle peut donc comporter tout autre objet et/ou toute autre fonction relatif (relative) à l'utilisation des ressources informatiques CH.

Les moyens de traitement MT sont agencés pour générer, pour un usager qui le requiert et conformément à un modèle informatique choisi, un programme informatique dédié de service d'utilisation de certaines au moins des ressources informatiques CH associées à la plateforme ER, par association d'objet(s) et/ou de fonction(s) et d'attribut(s) de ces derniers, qui ont tous été choisis par cet usager parmi ceux qui sont proposés par les moyens d'interface MI.

La génération d'un programme informatique dédié (ou personnalisé) s'effectue en développant un logiciel utilisant un langage informatique supportant un appel de services web, par exemple de type REST. Ce programme informatique dédié propose un dialogue guidé et/ou une interface graphique (à la charge de son développeur) dont les sollicitations de l'utilisateur final déclenchent l'appel à un ou plusieurs services offerts par le dispositif DI. Par exemple, ce programme informatique dédié peut proposer un enchaînement de tâches telles que : le chargement d'un fichier de licence à jour pour une application métier HPC, l'entrée des paramètres d'exécution de cette application métier HPC, le lancement du travail (job) avec la notification de l'utilisateur en cas d'erreur ou de fin normale, et, optionnellement, le lancement d'une session de visualisation distante (en cas de succès des opérations précédentes) et/ou d'export de statistiques d'utilisation des ressources.

Une fois qu'un programme informatique dédié a été généré par le dispositif DI pour un usager (sous le contrôle de ce dernier), il peut être utilisé par l'équipement communicant ECj de cet usager pour utiliser certaines au moins des ressources informatiques CH.

Par exemple, comme évoqué plus haut le modèle informatique, qui est choisi pour générer un programme informatique dédié, est REST (« REpresentational State Transfer »), du fait qu'il est bien adapté aux environnements Internet (ou Web) et de nuage (ou cloud). Mais cela n'est pas obligatoire.

On notera que le dispositif DI peut être éventuellement agencé de manière à permettre la génération de programmes informatiques dédiés conformes à différents modèles informatiques choisis, et notamment à ceux qui diffèrent de REST. Cela permet de rendre la plateforme ER utilisable par un plus grand nombre de types différents d'équipements communicants ECj d'usagers. Une telle situation est notamment illustrée dans l'exemple non limitatif de l'unique figure.

Grâce à l'invention, il est désormais possible de masquer aux usagers la grande complexité des architectures et services HPC qui constituent les ressources informatiques partagées, grâce à une unification méthodologique. On peut ainsi masquer les ordonnanceurs de travaux de calcul, les mécanismes de sécurité et les services d'annuaire et d'authentification, et offrir une présentation unifiée d'un ou plusieurs centres de calcul et d'une ou plusieurs organisations clientes. Par ailleurs, cela permet une centralisation, et le cas échéant une externalisation, des ressources de calcul, une collaboration transparente entre usagers partenaires distants, une construction et une gestion de catalogues de services applicatifs (par exemple HPC), et une unification des méthodes de travail.

On notera également que l'invention permet de tirer parti de toute éventuelle unification méthodologique partielle déjà offerte par un partenaire éditeur de logiciel ou un client final, du fait que les services offerts par le dispositif DI permettent de calquer la façon dont le partenaire ou le client final utilise ses applications métier.

Enfin, l'abstraction de certaines couches système, telles que le pilotage des serveurs de licence des applications métier (FlexLM, RLM, par clé, ou propriétaires), les couches de sécurité (su, sudo, ou Kerberos) et les ordonnanceurs de travaux (SGE, PBS, LSF, SLURM, ou OAR), confère un caractère tous domaines à l'invention.

L'invention ne se limite pas aux modes de réalisation de dispositif d'interface de programmation et d'équipement de réseau décrits ci-avant, seulement à titre d'exemple, mais elle englobe toutes les variantes que pourra envisager l'homme de l'art dans le seul cadre des revendications ci-après.

## Revendications

1. Dispositif d'interface de programmation (DI) pour un équipement de réseau (ER) accessible via au moins un réseau de communication (RC) et permettant à des usagers d'utiliser des ressources informatiques (CH), **caractérisé en ce qu'**il comprend des moyens d'interface (MI) agencés pour proposer auxdits usagers des objets informatiques et des fonctions relatifs à l'utilisation desdites ressources informatiques (CH), et des attributs paramétrables de ces objets informatiques et fonctions, et des moyens de traitement (MT) agencés pour générer, pour un usager et conformément à un modèle informatique choisi, un programme informatique dédié de service d'utilisation de certaines au moins desdites ressources informatiques (CH), par association d'objet(s) et/ou de fonction(s) et d'attribut(s) de ces derniers, tous choisis par cet usager parmi ceux proposés.

2. Dispositif selon la revendication 1, **caractérisé en ce que** chaque objet est choisi dans un groupe comprenant un utilisateur, un groupe, un projet, un travail, une session de visualisation, une ressource, une application, un formulaire de soumission, une licence, un agrégat, une consommation de ressource, un crédit, un service d'authentification, un ordonnanceur de travaux, et un mécanisme de sécurité.

3. Dispositif selon l'une des revendications 1 et 2, **caractérisé en ce que** chaque fonction est choisie dans un groupe comprenant une authentification, une statistique d'utilisation, un travail de calcul, une exécution, une planification, une gestion, et un calcul.

4. Dispositif selon l'une des revendications 1 à 3, **caractérisé en ce que** lesdites ressources informatiques (CH) constituent un calculateur à hautes performances et/ou distribué.

5. Dispositif selon la revendication 4, **caractérisé en ce que** ledit calculateur à hautes performances fait partie soit d'un nuage informatique (NI), soit de l'Internet.

6. Dispositif selon l'une des revendications 1 à 5, **caractérisé en ce que** ledit modèle informatique choisi est « representational state transfer ».

7. Dispositif selon l'une des revendications 1 à 6, **caractérisé en ce qu'**il est agencé sous la forme d'un produit programme d'ordinateur comprenant un jeu d'instructions propre à être exécuté par des moyens de traitement dudit équipement de réseau (ER).

8. Equipement de réseau (ER) propre à être connecté à au moins un réseau de communication (RC), **caractérisé en ce qu'**il comprend un dispositif d'interface de programmation (DI) selon l'une des revendications 1 à 7.

9. Equipement de réseau selon la revendication 8, **caractérisé en ce qu'**il est agencé sous la forme d'un portail de service.
